# EUROPÄISCHE PATENTSCHRIFT

(11) **EP 1 409 286 B1**
(45) Veröffentlichungstag und Bekanntmachung des Hinweises auf die Patenterteilung: **18.11.2009**
(21) Anmeldenummer: 02748853.5
(22) Anmeldetag: 12.07.2002
(51) Int. Cl.: B60N 2/235

(54) **VERRIEGELUNGSVORRICHTUNG FÜR EINEN FAHRZEUGSITZ**
LOCKING DEVICE FOR A VEHICLE SEAT
DISPOSITIF DE VERROUILLAGE D'UN SIEGE DE VEHICULE

(30) Priorität: 20.07.2001 DE 10135433
(43) Veröffentlichungstag der Anmeldung: 21.04.2004
(73) Patentinhaber: KEIPER GmbH & Co. KG, 67657 Kaiserslautern (DE)
(72) Erfinder: NOCK, Eckhard, 67551 Worms (DE)
(74) Vertreter: Patentanwälte Hosenthien-Held und Dr. Held
(86) Internationale Anmeldenummer: PCT/EP2002/007770
(87) Internationale Veröffentlichungsnummer: WO 2003/010025

(56) Entgegenhaltungen:
- WO-A-01/76907
- US-A- 4 836 608
- US-A- 5 540 117
- US-A- 5 681 086
- US-A- 5 762 400
- US-A- 5 884 972
- US-A- 6 149 235

## Beschreibung

Die Erfindung betrifft eine Verriegelungsvorrichtung für einen Fahrzeugsitz, insbesondere in einem Einsteller eines Kraftfahrzeugsitzes, mit den Merkmalen des Oberbegriffs des Anspruches 1.

Eine Verriegelungsvorrichtung dieser Art ist aus der US 5,540,117 A bekannt. Die nachveröffentlichte WO 01/76907 A1 zeigt eine Verriegelungsvorrichtung zur Verriegelung eines Beschlags eines Fahrzeugsitzes mit freischwenkbarer Rückenlehne. Bei dieser Verriegelungsvorrichtung sind eine schwenkbare Sperrklinke zum Verriegeln des Beschlagoberteils, ein mit der Sperrklinke drehfest verbundener Steuernocken, ein Fangelement zum Abstützen der Sperrklinke im Crashfall und ein federbelastetes, auf den Steuernocken einwirkendes Spannelement zum Verspannen der Sperrklinke gegenüber dem Beschlagoberteil vorgesehen. Die als Sicherungselemente wirkenden Fang- und Spannelemente sind schwenkbar gelagert und mit geeigneten Wirkflächen versehen. Es sind auch Verriegelungsvorrichtungen mit einem Spannelement, das auf einer zentralen Achse sitzt, einem zur zentralen Achse konzentrischen Zahnkranz als einem Verriegelungselement und mehreren, im Umfangsrichtung gleichmäßig verteilten weiteren Verriegelungselementen bekannt, so beispielsweise aus der US 6,149,235 A oder der US 5,884,972 A, welche drei bzw. zwei Sperrklinken als weitere Verriegelungselemente aufweisen, oder aus der US 5,762,400 A oder der US 5,681,086 A, welche jeweils zwei bzw. drei radial verschiebbar Riegel als weitere Verriegelungselemente aufweisen. Entsprechend weist das Spannelement eine zweizählige oder dreizählige Symmetrie auf. In der Praxis bleiben, beispielsweise hinsichtlich des Herstellungsaufwands, noch Wünsche offen.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Aufgrund der ausgewuchteten Lagerung, d.h. indem die Drehachse eines Sicherungselementes durch dessen Schwerpunkt verläuft, wird im Crashfall durch Massenkräfte kein resultierendes Drehmoment erzeugt, welches einen Drehimpuls, d.h. eine Schwenkbewegung, des Sicherungselementes bewirken würde. Eine Beschleunigung des Sicherungselementes, die sich über Kopplungen auf weitere Sicherungselemente öffnend auswirken könnte, wird dadurch vermieden, so dass das Sicherungselement sich beschleunigungsneutral verhält. Als ausgewuchtetes Sicherungselement kommen Spann- und/oder Fangelemente in Frage, die zum Spannen und - im Crashfall - zum Abstützen von als schwenkbare Sperrklinken ausgebildeten Verriegelungselementen geeignet sind. Bei den Verriegelungsvorrichtungen mit Sicherungselementen, die außerhalb des Schwerpunktes gelagert sind, können die genannten Probleme, insbesondere bei einer Kopplung der Sicherungselemente, auftreten und müssen durch entsprechende maßhaltige Bearbeitung der Bauteile verhindert werden.

Als Ausgleichsmasse eine Materialpartie am Sicherungselement anzuformen, hat den Vorteil, dass eine solche einstückige Ausbildung bei der Herstellung aufwandsneutral ist. Um Spannungen und Brüche bei Überlastungen zu vermeiden, kann die Materialpartie nasenartig mit abgerundeten oder kontinuierlichen Übergängen ausgebildet sein. Für einen einfacheren Massenausgleich sind vorzugsweise zwei Materialpartien mit gleichem Abstand zur Drehachse vorgesehen, und zwar in der Regel bezüglich der Drehachse auf der von der Wirkfläche des Sicherungselementes abgewandten Seite. Eine flache Ausbildung des Sicherungselementes spart nicht nur Bauraum, sondern vereinfacht auch das Auswuchten.

Die erfindungsgemäße Verriegelungsvorrichtung kann für verschiedene Einsteller eingesetzt werden, also sowohl für Dreheinsteller, wie beispielsweise Beschläge von Fahrzeugsitzen mit neigungsveränderlicher und/oder freischwenkbarer Rückenlehne, wie auch für Lineareinsteller, wie beispielsweise Längseinsteller oder Höheneinsteller in Kombination mit Diagonalstreben. Die erfindungsgemäße Verriegelungsvorrichtung kann auch für die Verriegelung verschiedener Stellungen eines faltbaren Fahrzeugsitzes verwendet werden.

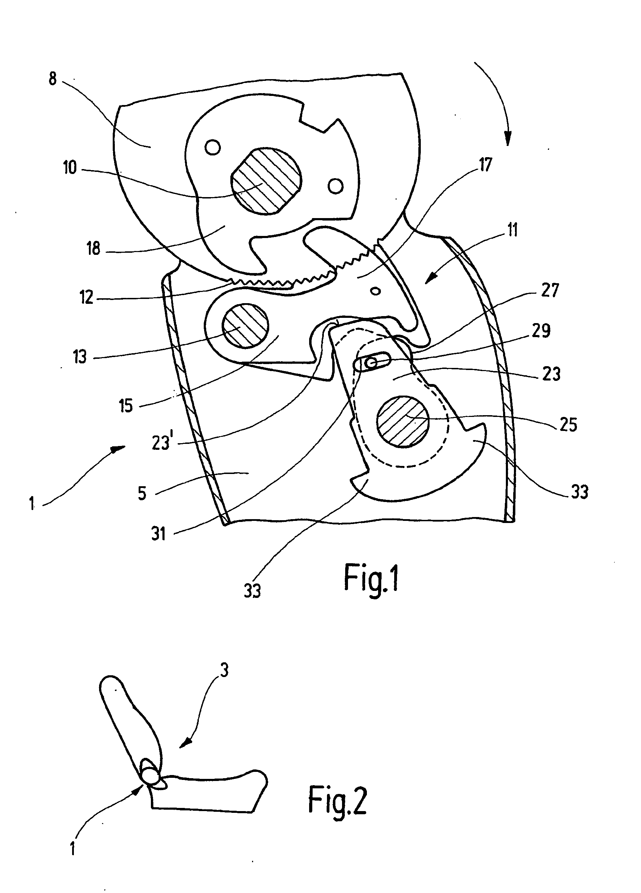

Im folgenden ist die Erfindung anhand eines in der Zeichnung dargestellten Ausführungsbeispiels näher erläutert. Es zeigen
- Fig. 1: eine teilweise geschnitten dargestellte Teilansicht eines Rastbeschlags mit erfindungsgemäßer Verriegelungsvorrichtung, und
- Fig. 2: eine schematische Darstellung eines Fahrzeugsitzes.

Ein Rastbeschlag 1 für einen Fahrzeugsitz 3 ist mit einem sitzteilstukturfesten Beschlagunterteil 5, welches zwei im wesentlichen flache, zusammengefügte, einen Bauraum des Beschlagunterteils 5 definierende Platten aufweist, sowie mit einem flachen, lehnenstrukturfesten Beschlagoberteil 8 versehen, welches wenigstens teilweise innerhalb des Bauraums des Beschlagunterteils 5 angeordnet und relativ zum Beschlagunterteil 5 um einen Lehnenbolzen 10 drehbar ist. Der Fahrzeugsitz 3 weist zwei spiegelbildliche Rastbeschläge 1 auf, welche die Rückenlehne des Fahrzeugsitzes 3 neigungseinstellbar und schwenkbar tragen. Für eine Verriegelungsvorrichtung 11 ist am Beschlagoberteil 8 im lehnenabgewandten Bereich ein um den Lehnenbolzen 10 herum gekrümmter Zahnkranz 12 und am Beschlagunterteil 5 eine innerhalb des Bauraums angeordnete, auf einem Klinkenlagerbolzen 13 schwenkbar gelagerte Sperrklinke 15 vorgesehen, wobei die Sperrklinke 15 und der Zahnkranz 12 je nach Relativstellung der Beschlagteile 5 und 8 unter Zahneingriff zusammenwirken.

An der Sperrklinke 15 ist in einer parallelen Ebene ein Steuernocken 17 vorgesehen, welcher einerseits mit einer um den Lehnenbolzen 10 herum angeordneten Steuerscheibe 18 des Beschlagoberteils 8 und andererseits mit einem Spannexzenter 23 zusammenwirkt. Der im wesentlichen flache Spannexzenter 23 ist auf einem Lagerbolzen 25 des Beschlagunterteils 5 auf der vom Zahnkranz 12 abgewandten Seite der Sperrklinke 15 schwenkbar gelagert. Zum Zusammenwirken mit dem Steuernocken 17 weist der Spannexzenter 23 eine bezüglich des Lagerbolzens 25 exzentrisch gekrümmte Spannfläche 23' auf. Im verriegelten Zustand des Rastbeschlags 1 drückt eine nicht näher dargestellte Feder den Spannexzenter 23 mit der Spannfläche 23' gegen den Steuernocken 17, so daß die Sperrklinke 15 mit ihren Zähnen in den Zahnkranz 12 gedrückt wird und damit im Gebrauchsfall gesichert ist.

Als Sicherung im Crashfall ist ein im wesentlichen flaches Fangelement 27 vorgesehen, welches ebenfalls federbelastet und schwenkbar auf dem Lagerbolzen 25 in gleicher Ebene mit der Sperrklinke 15, also in paralleler Ebene zum Spannexzenter 23, gelagert ist. Das Fangelement 27 ist normalerweise in geringem Abstand zur Sperrklinke 15 angeordnet. Im Crashfall wirkt ein Drehmoment auf das Beschlagoberteil 8, welches auf die Sperrklinke 15 einwirkt und gegebenenfalls den Spannexzenter 23 zurückdrückt. Die Sperrklinke 15 stützt sich nach einer minimalen Schwenkbewegung so auf dem Fangelement 27 ab, daß der Zahneingriff zwischen der Sperrklinke 15 und dem Zahnkranz 12 erhalten bleibt.

Parallel zum Lagerbolzen 25 ist am Fangelement 27 ein Entriegelungsbolzen 29 angebracht, welcher durch eine Kulisse 31 des Spannexzenters 23 greift. Das Fangelement 27 und der Spannexzenter 23 sind über die so gebildete Schlitz-Zapfen-Führung gekoppelt. Zum Entriegeln des Rastbeschlags 1 im Gebrauchsfall wird über den Entriegelungsbolzen 29 das Fangelement 27 entgegen seiner Federbelastung zurückgeschwenkt, wobei es nach einem toten Gang über die Schlitz-Zapfen-Führung den Spannexzenter 23 mitzieht, d.h. entgegen dessen Federbelastung öffnet. Im weiteren Verlauf dieser Bewegung nimmt das Fangelement 27 die Sperrklinke 15 mit, so daß diese geöffnet wird und der Rastbeschlag 1 entriegelt ist.

Um im Crashfall das öffnende Moment auf den Spannexzenter 23 möglichst gering zu halten, ist der Spannexzenter 23 ausgewuchtet auf dem Lagerbolzen 25 gelagert. Hierzu weist der Spannexzenter 23 mit gleichem Abstand zum Lagerbolzen 25 zwei angeformte, nasenartige Materialpartien 33 auf, welche bezüglich des Lagerbolzens 25 auf der von der Spannfläche 23' abgewandten Seite des Spannexzenters 23 angeordnet sind. Auf der radial weiter außen gelegenen Seite gehen die Materialpartien 33 mit einem kontinuierlichen Übergang in den Spannexzenter und dann in einander über, während auf der anderen Seite ein stufenartiger, abgerundeter Übergang vorgesehen ist. Die einstückige Ausbildung mit dem Spannexzenter 23 vereinfacht die Herstellung der Materialpartien 33. Aufgrund der gewählten Abmessungen der Materialpartien 33 liegt der Schwerpunkt des Spannexzenters 23 genau auf der Drehachse des Spannexzenters 23. Im Crashfall wird durch die Trägheit des Spannexzenters 23 weder ein Drehmoment erzeugt noch dieses über die Kopplung auf das Fangelement 27 übertragen. Vorzugsweise ist das Fangelement 27 in entsprechender Weise ausgewuchtet.

### Bezugszeichenliste

- 1: Rastbeschlag, Einsteller
- 3: Fahrzeugsitz
- 5: Beschlagunterteil
- 8: Beschlagoberteil
- 10: Lehnenbolzen
- 11: Verriegelungsvorrichtung
- 12: Zahnkranz
- 13: Klinkenlagerbolzen
- 15: Sperrklinke
- 17: Steuernocken, Steuerstück
- 18: Steuerscheibe
- 23: Spannexzenter, Spannelement, Sicherungselement
- 23': Spannfläche
- 25: Lagerbolzen
- 27: Fangelement
- 29: Entriegelungsbolzen
- 31: Kulisse
- 33: Materialpartie

## Patentansprüche

1. Verriegelungsvorrichtung für einen Fahrzeugsitz, insbesondere in einem Einsteller eines Kraftfahrzeugsitzes, mit zwei relativ zueinander beweglichen, in Eingriff bringbaren Verriegelungselementen (12, 15), von denen eines als eine schwenkbare Sperrklinke (15) ausgebildet ist, und deren Eingriff durch zwei um eine Drehachse (25) schwenkbar gelagerte Sicherungselemente gesichert wird, wobei die Sicherungselemente ausgebildet sind als ein federbelasteter Spannexzenter (23), welcher im Gebrauchsfall mit einer gekrümmten Spannfläche (23') auf die Sperrklinke (15) einwirkt und diese spannt, und als ein Fangelement (27), welches normalerweise in geringem Abstand zur Sperrklinke (15) angeordnet ist und im Crashfall die Sperrklinke (15) abstützt, **dadurch gekennzeichnet, dass** der Spannexzenter (23) und/oder das Fangelement (27) ausgewuchtet gelagert ist.

2. Verriegelungsvorrichtung nach Anspruch 1, **dadurch gekennzeichnet, dass** am ausgewuchtet gelagerten Sicherungselement (23) als Ausgleichsmasse wenigstens eine Materialpartie (33) angeformt ist.

3. Verriegelungsvorrichtung nach Anspruch 2, **dadurch gekennzeichnet, dass** die Materialpartie (33) nasenartig ausgebildet ist.

4. Verriegelungsvorrichtung nach Anspruch 2 oder 3, **dadurch gekennzeichnet, dass** zwei Materialpartien (33) mit gleichem Abstand zur Drehachse (25) vorgesehen sind.

5. Verriegelungsvorrichtung nach einem der Ansprüche 2 bis 4, **dadurch gekennzeichnet, dass** die Materialpartie bzw. Materialpartien (33) bezüglich der Drehachse (25) auf der von der Spannfläche (23') abgewandten Seite des Spannexzenters (23) vorgesehen sind.

6. Verriegelungsvorrichtung nach einem der vorhergehenden Ansprüche, **dadurch gekennzeichnet, dass** das ausgewuchtet gelagerte Sicherungselement (23) flach ausgebildet ist.

7. Verriegelungsvorrichtung nach einem der vorhergehenden Ansprüche, **dadurch gekennzeichnet, dass** die bezüglich eines die Drehachse definierenden Lagerbolzens (25) exzentrisch gekrümmte Spannfläche (23') mit einem Steuernocken (17) der Sperrklinke (15) zusammenwirkt.

8. Einsteller (1) für einen Fahrzeugsitz (3), **gekennzeichnet durch** eine Verriegelungsvorrichtung (11) nach einem der Ansprüche 1 bis 7.

9. Fahrzeugsitz (3) mit einem Einsteller (1) zur Relativbewegung und Verriegelung zweier Baugruppen des Fahrzeugsitzes (3), **gekennzeichnet durch** eine Verriegelungsvorrichtung (11) nach einem der Ansprüche 1 bis 7.

## Claims

1. A locking device for a vehicle seat, in particular in an adjuster of a motor vehicle seat, having at least two locking elements (12, 15) which can be moved relative to each other and can be brought into engagement, one of it being designed as a pivotable detent pawl (15), and their engagement being secured by two securing elements mounted pivotably about a rotational axis (25), wherein the securing elements are designed as a clamping eccentric (23), acting with a curved clamping surface (23') on the detent pawl (15) and clamping it when in use, and as an intercepting element (27) being normally arranged at a small distance from the detent pawl (15) and supporting the detent pawl (15) in the event of a crash, **characterized in that** the clamping eccentric (23) and/or the intercepting element (27) is mounted in a balanced manner.

2. The locking device as claimed in claim 1, **characterized in that** at least one section of material (33) is integrally formed on the balanced securing element (23) as a balancing weight.

3. The locking device as claimed in claim 2, **characterized in that** the section of material (33) is of lug-like design.

4. The locking device as claimed in claim 2 or 3, **characterized in that** two sections of material (33) are provided at the same distance from the rotational axis (25).

5. The locking device as claimed in one of claims 2 to 4, **characterized in that** the section of material or sections of material (33) is/are provided, with respect to the rotational axis (25), on that side of the clamping eccentric (23) which faces away from the clamping surface (23').

6. The locking device as claimed in one of preceding claims, **characterized in that** the balanced securing element (23) is of flat design.

7. The locking device as claimed in one of preceding claims, **characterized in that** the clamping surface (23'), being curved eccentrically with respect to a bearing bolt (25) defining the rotational axis, interacts with a control cam (17) of the detent pawl (15).

8. An adjuster (1) for a vehicle seat (3), which comprises a locking device (11) as claimed in one of claims 1 to 7.

9. A vehicle seat (3) having an adjuster (1) for the relative movement and locking of two subassemblies of the vehicle seat (3), which comprises a locking device (11) as claimed in one of claims 1 to 7.

## Revendications

1. Dispositif de verrouillage pour un siège de véhicule, en particulier dans un dispositif de réglage d'un siège de véhicule automobile, avec deux éléments de verrouillage (12, 15) mobiles l'un par rapport et l'autre et pouvant être amenés en engagement, dont l'un prend la forme d'un cliquet d'arrêt pivotant (15), et dont l'engagement est assuré par deux éléments de fixation montés pivotants autour d'un axe de rotation (25), les éléments de fixation prenant la forme d'un excentrique de blocage (23) chargé élastiquement, lequel, en service, coopère avec une surface de blocage courbe (23') sur le cliquet d'arrêt. (15) et la bloque, et d'un élément de retenue (27) qui est normalement disposé à une faible distance du cliquet d'arrêt (15) et qui soutient le cliquet d'arrêt (15) en cas de collision, **caractérisé par le fait que** l'excentrique de blocage (23) et/ou l'élément de retenue (27) sont montés débalourdés.

2. Dispositif de verrouillage selon la revendication 1, **caractérisé par le fait que**, sur l'élément de fixation (23) monté débalourdé, il est formé une masse de compensation constituée d'au moins une partie de matériau (33).

3. Dispositif de verrouillage selon la revendication 2, **caractérisé par le fait que** la partie de matériau (33) prend la forme de mentonnets.

4. Dispositif de verrouillage selon l'une des revendications 2 ou 3, **caractérisé par le fait que** deux parties de matériau (33) sont prévues avec une distance égale par rapport à l'axe de rotation (25).

5. Dispositif de verrouillage selon l'une des revendications 2 à 4, **caractérisé par le fait que** la ou les parties de matériau (33), par rapport à l'axe de rotation (25), sont prévues sur le côté de l'excentrique de blocage (23) opposé à là surface de blocage (23').

6. Dispositif de verrouillage selon l'une des revendications précédentes, **caractérisé par le fait que** l'élément de fixation (23) monté débalourdé est plat.

7. Dispositif de verrouillage selon l'une des revendications précédentes, **caractérisé par le fait que** la surface de serrage courbe (23'), excentrique par rapport à un boulon de palier (25) définissant l'axe de rotation, coopère avec une came de commande (17) du cliquet d'arrêt (15).

8. Dispositif de réglage (1) pour un siège de véhicule (3), **caractérisé par** un dispositif de verrouillage (11) selon l'une des revendications 1 à 7.

9. Siège de véhicule (3) avec un dispositif de réglage (1) destiné à permettre le déplacement relatif et le verrouillage de deux éléments de montage du siège de véhicule (3), **caractérisé par** un dispositif de verrouillage (11) selon l'une des revendications 1 à 7.
